# EUROPEAN PATENT SPECIFICATION

(11) **EP 0 324 522 B1**
(45) Date of publication and mention of the grant of the patent: **07.06.1995**
(21) Application number: 89200032.4
(22) Date of filing: 06.01.1989
(51) Int. Cl.: A22C 17/00, A22C 17/12

(54) **Device for cutting loose a bacon- and/or fatlayer from meat**
Vorrichtung zum Abschneiden der Speck- und/oder Fettschicht von Fleisch
Machine à couper une tranche de graisse et/ou de lard de la viande

(30) Priority: 12.01.1988 NL 8800063
(43) Date of publication of application: 19.07.1989
(73) Proprietor: Boekel, Cornelis Dirk, NL-1101 AS Amsterdam (NL)
(72) Inventor: Boekel, Cornelis Dirk, NL-1101 AS Amsterdam (NL)
(74) Representative: Koomen, M.J.I.

(56) References cited:
- EP-A- 091 698
- GB-A- 1 179 418
- NL-A- 6 602 017
- NL-A- 7 806 657
- US-A- 2 373 361
- US-A- 3 237 664
- US-A- 3 249 139
- US-A- 4 209 878

## Description

The invention relates to a device for cutting loose a bacon- and/or fatlayer from meat, consisting of a frame with a transportation surface for the meat to be processed and in which transportation surface a gripping roll has been arranged or to which transporting surface a gripping roll adjoins, by means of which the meat may be drawn against and past a cutting knife arranged near the gripping roll, while this cutting knife may be adjustable in height direction with regard to the gripping roll to adapt the knife to the thickness of the bacon- or fatlayer to be cut loose.

Such a device is known.

When applying this known device the average thickness of the bacon- or fatlayer to be cut off from the meat is estimated or measured and on the basis of this average thickness the cutting knife is adjusted with regard to the gripping roll.

This method has the disadvantage that the bacon- or fatlayer to be removed, which naturally does not have a same thickness everywhere, is only locally cut away to an optimum.

The meat processed by the known device shows local bacon- or fatlayers there, where the original layerthickness was greater then the estimated or measured average thickness on basis of which the cutting knife was adjusted with respect to the gripping roll.

The invention intends to obviate this disadvantage of the known device. Moreover, the device according to the invention is able to cut away the locally in thickness differing bacon- or fat layers transverse to the direction of transport in a favourable manner.

The device according to the invention is thereto characterized by the features of the characterising portion of claim 1. The device according to claim 1 differs from the teaching of NL-A-7806657 in that a gripping roll is used and in that the knife is subdivided into height adjustable sections.

This sensing device may have been mounted favourably immediately in front of the cutting knife, so that by moving on the meat to be processed over the transportation surface, the cutting knife is continuously adjusted in height direction with regard to the gripping roll, by which considerable less bacon- or fat remainders will be left on the meat.

The sensing device may be carried out in various ways. So, the position of the separating plane between the meat and the bacon- or fat layer present thereon nay be determined by measuring the electrical conductivity, that in the bacon- or fat layer differs considerably from that of the underlying meat.

In a favourable embodiment of the device according to the invention, the sensing device is formed by an ultra-sonic measuring device, and by means of which output signal the height adjustment of the cutting knife may be controlled.

Besides in that the thickness of the bacon- or fat layer to be cut loose may vary in the direction of transport, such may also be the case in the direction perpendicular to the direction of transport.

As already remarked herebefore, the sensing device as seen in the direction of transport, favourably may have been mounted in front of the cutting knife.

In a further working out of the device according to the invention, a second sensing device is arranged behind the cutting knife, and which in inverse feed back is coupled to the first sensing device.

The height adjustment of the cutting knife or the cutting knife sections may be carried out in a known way, such as for instance by means of a hydraulic cilinder or hydraulic cilinders.

In another embodiment of the device according to the invention, the cutting knife is flexible transverse to the direction of transport, and is mounted onto a number, over the length of the knife distributed supporting elements, which each may be adjusted in height direction under the control of an associated sensing device.

In this embodiment of the device according to the invention, the bacon- or fat layers, of which the separating plane generally extend undulating, are cut off in a corresponding manner during the operation.

The invention will now be further explained by way of example with reference to the accompanying drawing.

Fig. 1 is a schematic side view of this embodiment.

Fig. 2 is a top view of the embodiment according to Fig. 1.

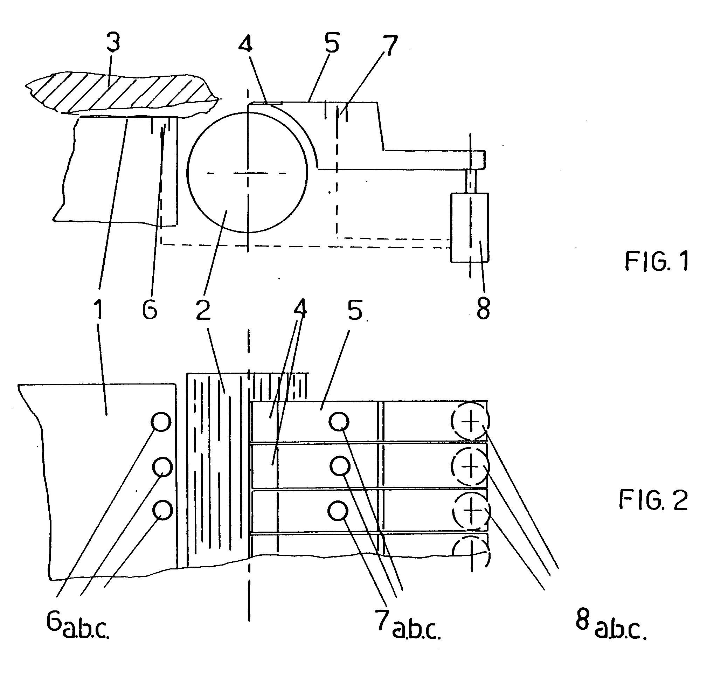

As is shown in Fig. 1, the device is provided with a transportation surface 1 to which a toothed rotatable gripping roll 2 adjoins, and by means of which a piece of meat 3 provided with a bacon layer may be drawn against and past a cutting knife 4, and during which the bacon layer is cut loose from the meat.

Immediately behind the cutting knife a further transportation surface 5 is present, over which the processed meat may be carried off.

As is shown in Fig. 2 , the cutting knife 4 is subdivided into a number of sections 4 a, b, a, etc. and which each separately may be adjusted in heigh direction in respect to the gripping roll 2 under the control of an ultra-sonic transducer or sensor 6 a, b, c, etc.
With the height adjustments of the knife sections 4, a, b, c, etc. under control of the associated sensors 6, a, b, c, etc. the bacon layer present in a generally not flat plane may be cut loose from the meat in a relatively selective manner.
In the device according to this embodiment the depth adjustments of the succeeding knife sections will generally take place gradually.

As is further shown in the drawing, a second sensor 7 a, b, c, etc. has been arranged behind each knife section, and of which the output signal has been coupled in inverse feed back in respect to the output signal of the first sensors 6, a, b, c, etc.

The knife sections each may be adjusted in heigh direction in a known manner, such as for instance by means of hydraulic cilinders 8 a, b, c etc.

## Claims

1. Device for cutting loose a bacon or fatlayer from a piece of meat, consisting of a frame with a transportation surface (1) for the meat (3) to be processsed, and in which transportation surface a gripping roll (2) has been arranged or to which transportation surface a gripping roll adjoins, by means of which the meat can be drawn against and past a cutting knife (4) located near the gripping roll, while this cutting knife is adjustable in height direction with regard to the gripping roll for the adaptation to the thickness of the bacon or fatlayer to be cut loose, characterized in that the cutting knife is subdivided into a number of sections, each of which is adjustable in height direction under the control of an associated sensing device (6) detecting the seperating plane between the meat and the bacon or fatlayer.

2. Device as claimed in claim 1, characterized in that the sensing device is an ultra-sonic measuring device, by means of which output signal the height adjustment of the cutting knife may be controlled.

3. Device as claimed in claim 1 or 2, characterized in that the sensing device, as seen in the direction of transport, is mounted before the cutting knife.

4. Device as claimed in one of the preceding claims, characterized in that behind the cutting knife a second sensing device (7) is mounted, and which in inverse feedback is coupled to the first sensing device.

5. Device as claimed in one of the preceding claims, characterized in that the cutting knife has been carried out flexible transverse to the direction of transportation and further is mounted onto a number of supporting elements distributed along the length of the knife, and which are seperately adjustable in height direction under the control of an associated sensing device.

## Patentansprüche

1. Vorrichtung zum Abtrennen einer Speck- oder Fettschicht von einem Fleischstück, bestehend aus einem Rahmen mit einer Transportfläche (1) für das zu behandelnde Fleisch (3), wobei eine Greifrolle (2) in der Transportfläche oder an letzterer angrenzend angeordnet ist, durch welche das Fleisch gegen ein nahe der Greifrolle angeordnetes Schneidmeser (4) und an diesem vorbei bewegt werden kann, und das Schneidmesser mit Bezug auf die Greifrolle zur Anpassung an die Dicke der wegzuschneidenden Speck- oder Fettschicht höheneinstellbar ist, dadurch gekennzeichnet, daß das Schneidmesser in eine Anzahl von Abschnitten unterteilt ist, von denen jeder mittels Steuerung durch einen zugeordneten Fühler (6) höheneinstellbar ist, welcher die Trennfläche zwischen dem Fleisch und der Speck- oder Fettschicht feststellt.

2. Vorrichtung nach Anspruch 1, dadurch gekennzeichnet, daß der Fühler ein Ultraschall-Meßgerät ist und mittels des Ausgangssignal desselben die Höheneinstellung des Schneidmessers gesteuert werden kann.

3. Vorrichtung nach Anspruch 1 oder 2, dadurch gekennzeichnet, daß der Fühler in Transportrichtung vor dem Schneidmesser angebracht ist.

4. Vorrichtung nach einem der vorhergehenden Ansprüche, dadurch gekennzeichnet, daß hinter dem Schneidmesser ein zweiter Fühler (7) angebracht ist, der mittels Rückführung mit dem ersten Fühler verbunden ist.

5. Vorrichtung nach einem der vorhergehenden Ansprüche, dadurch gekennzeichnet, daß das Schneidmesser quer zur Transportrichtung flexibel ausgeführt ist und ferner auf einer Anzahl von entlang der Messerlänge verteilten Tragelementen angebracht ist, die mittels Steuerung durch einen zugeordneten Fühler getrennt höheneinstellbar sind.

## Revendications

1. Dispositif pour séparer le lard ou la couche grasse d'une pièce de viande comprenant un support présentant une surface de déplacement (1) pour la viande (3) à traiter, et dans lequel un rouleau d'entraînement (2) est disposé dans ladite surface de déplacement ou à laquelle un rouleau d'entraînement est adjoint, au moyen duquel la viande peut être tirée contre et au-delà d'un couteau (4) disposé au voisinage du rouleau d'entraînement (2) le couteau (4) étant ajustable en hauteur par rapport au rouleau d'entraînement pour l'adaptation à l'épaisseur de lard ou de la couche grasse à couper, caractérisé en ce que le couteau est subdivisé en plusieurs sections, chacune desdites sections étant ajustable en hauteur sous la commande d'un dispositif de détection associé (6) détectant le plan de séparation entre la viande et le lard ou la couche grasse.

2. Dispositif selon la revendication 1, caractérisé en ce que le dispositif de détection est un dispositif de mesure ultrasonique délivrant un signal de sortie au moyen duquel l'ajustement en hauteur du couteau peut être commandé.

3. Dispositif selon la revendication 1 ou 2, caractérisé en ce que le dispositif de détection (6), vu dans la direction de déplacement, est monté avant le couteau.

4. Dispositif selon l'une quelconque des revendications précédentes, caractérisé en ce que, derrière le couteau, est disposé un second dispositif de détection (7) couplé en contre réaction avec le premier dispositif détecteur.

5. Dispositif selon l'une des revendications précédentes, caractérisé en ce que le couteau est flexible en direction transversale par rapport à la direction de déplacement et de plus, est monté sur plusieurs éléments de support distribués le long de la longueur du couteau, lesdits éléments étant séparément ajustables en hauteur sous la commande d'un dispositif de détection associée.
